# EUROPÄISCHE PATENTSCHRIFT

(11) **EP 3 232 691 B1**
(45) Veröffentlichungstag und Bekanntmachung des Hinweises auf die Patenterteilung: **26.04.2023**
(21) Anmeldenummer: 17157887.5
(22) Anmeldetag: 24.02.2017
(51) Int. Cl.: H04S 7/00, H04R 29/00, G01H 7/00

(54) **VERFAHREN ZUR ERMITTLUNG DER RAUMIMPULSANTWORT EINER FAHRGASTZELLE EINES KRAFTFAHRZEUGS**
METHOD FOR DETERMINING THE SPACIAL IMPULSE RESPONSE OF A PASSENGER CABIN OF A MOTOR VEHICLE
PROCÉDÉ DE DÉTERMINATION DE LA RÉPONSE D'IMPULSION SPATIALE D'UN HABITACLE D'UN VÉHICULE AUTOMOBILE

(30) Priorität: 25.02.2016 DE 102016103344
(43) Veröffentlichungstag der Anmeldung: 18.10.2017
(73) Patentinhaber: ASK Industries GmbH, 94559 Niederwinkling (DE)
(72) Erfinder: Kalinichenko, Victor, 94234 Viechtach (DE)
(74) Vertreter: Hafner & Kohl PartmbB

(56) Entgegenhaltungen:
- EP-A2- 1 069 413
- WO-A2-2004/047486
- J V C P PAULO ET AL: "Room impulse response using segmented maximum length sequences (MLS) for annoyance minimization", PROCEEDINGS OF THE TECNI-ACUSTICA, 1. Januar 2000 (2000-01-01), Seiten 1-6, XP055382212,
- MASSIMO SERAFINI ET AL: "Feasibility of masked pseudo random sequences for occupied measurement in auditoria", FORUM ACUSTICUM 2011, 27. Juni 2011 (2011-06-27), Seiten 1-4, XP055382220,
- JOHAN LUDVIG NIELSEN: "Maximum-length sequence measurement of room Impuse responses with high level disturbances", 100TH CONVENTION OF THE AES, 11. Mai 1996 (1996-05-11), - 14. Mai 1996 (1996-05-14), Seiten 1-26, XP040370597,
- ALBERTO GONZALEZ, PEDRO ZUCCARELLO, GEMA PINERO, MARIA DE DIEGO: "Simultaneous Measurements of Multichannel Acoustic Systems", J. AUDIO ENG. SOC., Bd. 52, Nr. 1/2, 1. Januar 2004 (2004-01-01), Seiten 26-42, XP040377741,
- TATARIA HARSH ET AL: "Simultaneous channel estimation and joint time-frequency domain crosstalk cancellation in multichannel personal audio systems", 2014 IEEE WORKSHOP ON STATISTICAL SIGNAL PROCESSING (SSP), IEEE, 29. Juni 2014 (2014-06-29), Seiten 488-491, XP032631271, DOI: 10.1109/SSP.2014.6884682 [gefunden am 2014-08-26]
- PAULO J P ET AL: "A hybrid MLS technique for room impulse response estimation", APPLIED ACOUSTICS, ELSEVIER PUBLISHING, GB, Bd. 70, Nr. 4, 1. April 2009 (2009-04-01), Seiten 556-562, XP025884799, ISSN: 0003-682X, DOI: 10.1016/J.APACOUST.2008.07.007 [gefunden am 2008-09-18]
- JOSÉ LOPEZ ET AL: "PERFORMANCE ANALYSIS OF SIMULTANEOUS MULTICHANNEL CHARACTERIZATION OF ACOUSTIC SYSTEMS", THE 3RD EAA EUROPEAN CONGRESS ON ACOUSTICS (FORUM ACUSTICUM 2002), SEVILLA, SPAIN, SEPTEMBER, 2002., 1. September 2002 (2002-09-01), XP055447121,
- Massimo Serafini: "A hybrid method for impulse response measurements with synthesized musical tones and masked-mls stimuli", , 1 December 2015 (2015-12-01), XP055382069, Retrieved from the Internet: URL:http://usir.salford.ac.uk/39002/1/Thes isResub_PRINTED.pdf [retrieved on 2021-11-29]

## Beschreibung

Die Erfindung betrifft ein Verfahren zur Ermittlung der Raumimpulsantwort einer ein bestimmtes Raumvolumen aufweisenden Fahrgastzelle eines Kraftfahrzeugs nach Anspruch 1.

Die Ermittlung der Raumimpulsantwort eines ein bestimmtes Raumvolumen aufweisenden, insbesondere geschlossenen, Innenraums, wie z. B. einer Fahrgastzelle eines Kraftfahrzeugs, ist unter verschiedenen, die akustischen Eigenschaften eines jeweils untersuchten Innenraums betreffenden Aspekten bekannt. Beispielsweise kann auf Grundlage einer ermittelten Raumimpulsantwort eine Ermittlung von, gegebenenfalls störenden, Neben- oder Umgebungsgeräuschen, einer Echounterdrückung bzw. -kompensation, etc. vorgenommen werden.

Zur Ermittlung der Raumimpulsantwort ist die Verwendung eines Maximum-Length-Sequence-Signals (MLS-Signal) grundsätzlich bekannt. Bei einem MLS-Signal handelt es sich im Allgemeinen um eine pseudozufällige, binäre Signalfolge. Entsprechende MLS-Signale werden in das Raumvolumen des Innenraums, dessen Raumimpulsantwort ermittelt werden soll, ausgegeben. Das in den Innenraum ausgegebene MLS-Signal wird aufgenommen und die Raumimpulsantwort vermittels geeigneter Auswertealgorithmen aus dem aufgenommenen MLS-Signal ermittelt.

Bis dato ist es üblich, im Rahmen der Ermittlung einer Raumimpulsantwort nur das MLS-Signal auszugeben. Derart soll der Einfluss gegebenenfalls störender Neben- oder Umgebungssignale auf die Ermittlung der Raumimpulsantwort minimiert werden. Insbesondere wird die Ausgabe von Audiosignalen, d. h. z. B. Musik, während der Ausgabe von MLS-Signalen zur Ermittlung einer Raumimpulsantwort bis dato üblicherweise

Zum Beispiel offenbart EP 1 069 413 A2 ein Verfahren zur Ermittlung der akustischen Raumeigenschaften des Fahrgastraumes wobei ein definierter Testschall vom Nutzschall-Analyseblock über den Lautsprecher zusammen mit dem Nutzschall in den Fahrgastraum ausgesendet wird. Der reflektierte Testschallanteil des Auswerteschalles wird schließlich im Hinblick auf die akustischen Raumeigenschaften analysiert.

Dies stellt einen verbesserungswürdigen Zustand dar.

Der Erfindung liegt die Aufgabe zugrunde, ein demgegenüber verbessertes Verfahren zur Ermittlung der Raumimpulsantwort einer ein bestimmtes Raumvolumen aufweisenden Fahrgastzelle eines Kraftfahrzeugs nach Anspruch 1 anzugeben.

Die Aufgabe wird durch ein Verfahren gemäß Anspruch 1 gelöst. Die hierzu abhängigen Ansprüche betreffen vorteilhafte Ausführungsformen des Verfahrens. Die Aufgabe wird ferner durch die Vorrichtung gemäß Anspruch 9 und die Audioeinrichtung gemäß Anspruch 10 gelöst.

Das hierin beschriebene Verfahren dient im Allgemeinen der Ermittlung der Raumimpulsantwort wenigstens eines Teils einer Fahrgastzelle bildenden Innenraum einer eines Kraftfahrzeugs, bzw. eine entsprechende Fahrgastzelle eines Kraftfahrzeugs.

In einem ersten Schritt des Verfahrens wird gleichzeitig bzw. simultan ein wenigstens ein im Weiteren abgekürzt als MLS-Signal bezeichnetes Maximum-Length-Sequence-Signal (deutsch Folge-maximaler-Länge-Signal) und wenigstens ein von dem MLS-Signal unterschiedliches Audiosignal (im Weiteren abgekürzt als Audiosignal bezeichnet) in den im Hinblick auf seine Raumimpulsantwort zu untersuchenden Innenraum bzw. in das im Hinblick auf seine Raumimpulsantwort zu untersuchende Raumvolumen ausgegeben. Mit anderen Worten wird durch die verfahrensgemäße gleichzeitige Ausgabe eines MLS-Signals und eines Audiosignals während der Ausgabe des Audiosignals auch ein MLS-Signal ausgegeben. Durch die in dem ersten Schritt des Verfahrens erfolgende simultane Ausgabe eines MLS-Signals und eines Audiosignals wird ein Kombinationssignal erzeugt, welches das MLS-Signal und das Audiosignal enthält.

Wie eingangs erwähnt, handelt es sich bei einem MLS-Signal im Allgemeinen um eine pseudozufällige, binäre Signalfolge. Die (zeitliche) Länge und die sich hieraus ergebende Energie des ausgegebenen MLS-Signals ist grundsätzlich variabel. Beispielsweise kann ein MLS-Signal mit einer (zeitlichen) Länge in einem Bereich zwischen 10 und 90 Sekunden, insbesondere einer (zeitlichen) Länge zwischen 20 und 60 Sekunden, verwendet werden.

Die Bereitstellung des MLS-Signals erfolgt über eine MLS-Quelle. Die MLS-Quelle ist typischerweise dazu eingerichtet, MLS-Signale bestimmter (zeitlicher) Länge zu erzeugen. Selbstverständlich ist es auch möglich, dass die MLS-Quelle ein extern erzeugtes MLS-Signal erhält, sodass für das hierin beschriebene Verfahren auch ein extern erzeugtes MLS-Signal verwendet werden kann.

Das MLS-Signal wird vorzugsweise mit einer im Vergleich zu dem Audiosignal geringeren Energie, insbesondere mit einer geringeren Lautstärke, ausgegeben. Das MLS-Signal wird also vorzugsweise in einem Energie- bzw. Lautstärkebereich ausgegeben, in dem es, insbesondere auch bei isolierter Ausgabe ohne das Audiosignal, für das menschliche Ohr nicht oder kaum hörbar ist. Konkret kann das MLS-Signal z. B. in einem Energie- bzw. Lautstärkebereich unterhalb -10 dB, bevorzugt unterhalb -20 dB, im Verhältnis zu dem Audiosignal ausgegeben werden. Entsprechend enthält das Kombinationssignal vorzugsweise einen hörbaren Anteil in Form des Audiosignals und einen nicht oder kaum hörbaren Anteil in Form des MLS-Signals. Die simultane Ausgabe des MLS-Signals und des Audiosignals beeinträchtigt das Hörvergnügen eines Rauminsassen sonach nicht. Ein Rauminsasse nimmt akustisch nur den durch das Audiosignal gegebenen hörbaren Anteil wahr. Das MLS-Signal ist psychoakustisch betrachtet mit dem Audiosignal maskiert. Der Energieunterscheid zwischen dem MLS-Signal und dem Audiosignal ist ebenso ein wichtiges Kriterium für die Qualität der Ermittlung der Raumimpulsantwort.

Bei einem Audiosignal kann es sich z. B. um eine Musik- und/oder Textinformation, d. h. z. B. um ein Musikstück, ein gesprochenes Stück, d. h. z. B. ein Hörspiel oder ein (weitgehend) gesprochener Beitrag, etc. handeln. Als Audiosignal kann sonach ein von einem analogen oder digitalen Informationsträger, insbesondere einer Kassette, einer CD, einem mobilen Endgerät, wie einem Laptop, Smartphone, Tablet-PC, etc., einem portablen oder nicht-portablen Speichergerät, wie einem USB-Stick, oder von einem externen Datenspeicher, insbesondere einem Kommunikationsnetzwerkspeicher, wie einem "Cloud-Speicher", abspielbares bzw. empfangbares bzw. herunterladbares Musik- und/oder Textinformation beinhaltendes Signal verwendet werden.

Die zusätzliche gleichzeitige Ausgabe des MLS-Signals kann gegebenenfalls (nur) zu bestimmten vorgebbaren oder vorgegebenen Zeitpunkten und/oder (nur) für bestimmte vorgebbare oder vorgegebene Zeitdauern erfolgen. Entsprechend kann die gleichzeitige Ausgabe des MLS-Signals und des Audiosignals gegebenenfalls nur zu bestimmten vorgebbaren oder vorgegebenen Zeitpunkten und/oder nur für eine bestimmte vorgebbare oder vorgegebene Zeitdauer erfolgen, wobei im Übrigen nur das Audiosignal ausgegeben wird. Der erste Schritt des Verfahrens kann demnach z. B. implementiert werden, indem während der Ausgabe des Audiosignals zumindest zeitweise zusätzlich ein MLS-Signal ausgegeben wird.

Verfahrensgemäß werden zur Ausgabe entsprechender MLS-Signale und Audiosignale eine oder mehrere Signalausgabeeinrichtungen verwendet. Eine entsprechende Signalausgabeeinrichtung kann als ein Lautsprecher ausgebildet sein oder wenigstens einen solchen umfassen.

In einem zweiten Schritt des Verfahrens wird die Raumimpulsantwort aus dem Kombinationssignal ermittelt bzw. extrahiert. Hierfür können an und für sich bekannte Methoden angewendet werden, welche z. B. in dem Fachartikel "Maximum Length Sequence" von Ole Herman Bjor, Copyright Norsonic AS 1995 - 2000, abzurufen unter http://www.gracey.co.uk/downloads/nor_mls_theory.pdf, beschrieben sind. Die Ermittlung bzw. Extrahierung der Raumimpulsantwort aus dem Kombinationssignal erfolgt typischerweise direkt.

Für die Ermittlung der Raumimpulsantwort aus dem Kombinationssignal wird sich verfahrensgemäß zunutze gemacht, dass ein MLS-Signal sehr gute Auto-Korrelationseigenschaften aufweist und grundsätzlich nicht mit sich selbst korrelierbar bzw. korreliert ist. Ferner ist ein MLS-Signal nicht (oder kaum) mit einem Audiosignal korrelierbar bzw. korreliert. Dies ist wesentliche Voraussetzung für die Möglichkeit der (direkten) Ermittlung der Raumimpulsantwort aus dem Kombinationssignal.

Im Hinblick auf die Ermittlung der Raumimpulsantwort kann das Audiosignal als "Störgeräusch" (engl. noise) erachtet werden. Der Einfluss des Störgeräuschs kann durch die Länge des verwendeten MLS-Signals beeinflusst werden, wobei gilt, dass der "störende" Einfluss des Audiosignals durch ein im Vergleich langes MLS-Signal reduziert werden kann. Bei entsprechender Länge des MLS-Signals kann der "störende" Einfluss des Audiosignals gegebenenfalls sogar vernachlässigt werden. Mit anderen Worten ist die Qualität der Ermittlung der Raumimpulsantwort über die Länge des verwendeten MLS-Signals beeinflussbar. Wie erwähnt, ist neben der Länge des MLS-Signals auch der Energieunterscheid zwischen dem MLS-Signal und dem Audiosignal wichtiges Kriterium für die Qualität der Ermittlung der Raumimpulsantwort. Die Ermittlung der Raumimpulsantwort kann konkret vermittels Transformations- und Faltungs- bzw. Konvolutionsmethoden erfolgen. Zur Ermittlung der Raumimpulsantwort können entsprechend geeignete Transformations- bzw. Faltungsalgorithmen, d. h. z. B. (schnelle) Fourier-Transformations-Algorithmen oder (schnelle) Hadamard-Transformations-Algorithmen, verwendet werden. Die Verwendung von (schnellen) Hadamard-Transformations-Algorithmen ist im Vergleich wenig rechenintensiv und insofern besonders effizient.

Dadurch, dass verfahrensgemäß die Ausgabe des für die Ermittlung der Raumimpulsantwort relevanten MLS-Signals und eines Audiosignals gleichzeitig bzw. simultan erfolgt, ist für einen Hörer eine deutliche Komfortsteigerung gegeben, da die Ausgabe des Audiosignals für die Ermittlung der Raumimpulsantwort nicht unterbrochen werden muss. Verfahrensgemäß ist die Ermittlung der Raumimpulsantwort während der Ausgabe des Audiosignals möglich.

Wie erwähnt, wird das MLS-Signal vorzugsweise mit einer im Vergleich zu dem Audiosignal geringeren Energie, insbesondere einer geringeren Lautstärke, ausgegeben. Derart ist die erwähnte psychoakustische Maskierung des MLS-Signals mit dem Audiosignal möglich. Das MLS-Signal wird sonach vorzugsweise mit einer bestimmten Schwächung, d. h. geschwächt, ausgegeben. Das MLS-Signal wird dabei in Abhängigkeit wenigstens eines Schwächungskriteriums durch einen statischen oder dynamischen Schwächungsfaktor geschwächt ausgegeben.

Unter einer Schwächung des MLS-Signals ist eine Reduzierung der Energie bzw. der Lautstärke des MLS-Signals unter einen bestimmten Grenzwert zu verstehen. Ein entsprechender Grenzwert kann beispielsweise bei -20 dB im Verhältnis zu dem Audiosignal liegen. Der Energiebereich des MLS-Signals lässt sich in Abhängigkeit des Schwächungskriteriums bzw. des Schwächungsfaktors gezielt einstellen bzw. anpassen.

Als Schwächungskriterium kann wenigstens ein akustischer Parameter des Audiosignals, insbesondere die aktuelle, mittlere oder (nach einer vermittels geeigneter Analysealgorithmen durchgeführten Lautstärkenanalyse vorausberechnete) künftige Lautstärke des Audiosignals, verwendet werden. Als Schwächungskriterium wird jedoch wenigstens ein die akustischen Eigenschaften, insbesondere die Raumimpulsantworteigenschaften, des Innenraums beeinflussender Parameter, nämlich ein physikalischer Parameter, wie z. B. Atmosphäre, Druck, Feuchtigkeit, Temperatur, etc. und/oder das freie Raumvolumen des Innenraums, verwendet.

Das freie Raumvolumen des Innenraums ist indirekt proportional zu einem Objektfüllgrad des Raumvolumens mit Objekten. Der Objektfüllgrad beschreibt die Anordnung von belebten und/oder unbelebten Objekten, d. h. bezogen auf eine Fahrgastzelle als Innenraum insbesondere Insassen, innerhalb des Innenraums relativ zu dem freien Raumvolumen des leeren Innenraums.

Alternativ oder ergänzend zu einer entsprechenden Schwächung des MLS-Signals kann das MLS-Signal in Abhängigkeit eines Anpassungskriteriums durch einen statischen oder dynamischen Anpassungsfaktor angepasst an das wenigstens eine Audiosignal ausgegeben werden. Unter einer Anpassung des MLS-Signals ist eine Erhöhung oder Reduzierung der Energie bzw. der Lautstärke des MLS-Signals relativ zu der Energie bzw. Lautstärke des Audiosignals zu verstehen.

Auch als Anpassungskriterium kann wenigstens ein akustischer Parameter des Audiosignals, insbesondere die aktuelle, gemittelte bzw. mittlere oder (nach einer vermittels geeigneter Analysealgorithmen durchgeführten Lautstärkenanalyse vorausberechnete) künftige Lautstärke des Audiosignals, verwendet werden.

Jedoch wird als Anpassungskriterium zumindest ein die akustischen Eigenschaften, insbesondere die Raumimpulsantworteigenschaften, des Innenraums beeinflussender Parameter, nämlich ein physikalischer Parameter, wie z. B. Atmosphäre, Druck, Feuchtigkeit, Temperatur, etc. und/oder das freie Raumvolumen des Innenraums, verwendet.

Zweckmäßig erfolgt die Anpassung des MLS-Signals an das Audiosignal derart, dass, insbesondere bis zu einer vorgebbaren oder vorgegebenen Maximalenergie bzw. Maximallautstärke des MLS-Signals, stets ein konstantes Verhältnis zwischen der Energie bzw. Lautstärke des MLS-Signals und der Energie bzw. Lautstärke des Audiosignals gegeben ist. Hierfür kann eine vermittels eines geeigneten Analysealgorithmus durchgeführte Lautstärkenanalyse des Audiosignals erforderlich sein, welcher eine entsprechende Anpassung des MLS-Signals folgt. Eine Maximalenergie bzw. Maximallautstärke des MLS-Signals wird typischerweise derart vorgegeben, dass das MLS-Signal für das menschliche Ohr (weitgehend) unhörbar bleibt. In dem Sonderfall eines besonders schwachen Audiosignals wird zweckmäßig darauf geachtet, dass das MLS-Signal einen bestimmten Energieschwellwert nicht unterschreitet.

Es wurde bereits erwähnt, dass zur Ausgabe entsprechender MLS-Signale und Audiosignale Signalausgabeeinrichtungen verwendet werden. Sofern mehrere Signalausgabeeinrichtungen verwendet werden, besteht die Möglichkeit über einzelne, mehrere oder sämtliche Signalausgabeeinrichtungen gleichzeitig ein MLS-Signal und ein Audiosignal auszugeben. Die über jeweilige Signalausgabeeinrichtungen ausgegebenen MLS-Signale müssen sich unterscheiden. Die über jeweilige Signalausgabeeinrichtungen ausgegebenen Audiosignale können sich gleichen oder unterscheiden. Über eine erste Signalausgabeeinrichtung kann sonach gleichzeitig ein erstes MLS-Signal und ein erstes Audiosignal und über eine weitere Signalausgabeeinrichtung gleichzeitig ein weiteres MLS-Signal und ein weiteres Audiosignal ausgegeben werden. Sowohl das erste MLS-Signal und das weitere MLS-Signal unterscheiden sich, das erste Audiosignal und das weitere Audiosignal können sich gleichen oder unterscheiden. Alternativ zu der jeweils gleichzeitigen Ausgabe von MLS-Signalen und Audiosignalen über einzelne Signalausgabeeinrichtungen ist es jedoch auch denkbar, über eine erste Signalausgabeeinrichtung nur (ein) MLS-Signal(e) und über eine weitere Signalausgabeeinrichtung nur (ein) Audiosignal(e) auszugeben.

Für den Fall, dass (wenigstens zwei) unterschiedliche MLS-Signale ausgegeben werden, kann vermittels hard- und/oder softwaremäßig implementierter Auswerte- bzw. Zuordnungsalgorithmen auf Grundlage der empfangenen unterschiedlichen MLS-Signale eine Zuordnung der empfangenen MLS-Signale zu jeweiligen Signalausgabeeinrichtungen vorgenommen. Die Zuordnung empfangener MLS-Signale zu jeweiligen Signalausgabeeinrichtungen ist auf Grundlage der besonderen Korrelationseigenschaften von MLS-Signalen möglich.

Für den Fall, in dem mehrere Signalausgabeeinrichtungen zur Ausgabe eines MLS-Signals und eines Audiosignals verwendet werden, ist folgende Vorgehensweise zweckmäßig, bei welcher nur ein (einziges) MLS-Signal einer bestimmten (zeitlichen) Länge verwendet wird. Das verwendete MLS-Signal wird in wenigstens zwei MLS-Segmente unterteilt. Die (zeitlichen) Längen der jeweiligen MLS-Segmente können sich gleichen oder unterscheiden. Für das Beispiel eines MLS-Signals mit einer (zeitlichen) Länge von z. B. 20 Sekunden, kann ein erstes MLS-Segment z. B. die ersten 3 Sekunden des MLS-Signals, ein zweites MLS-Segment z. B. die zweiten drei Sekunden des MLS-Signals, ein drittes MLS-Segment z. B. die dritten drei Sekunden des MLS-Signals und ein viertes MLS-Segment z. B. die übrigen elf Sekunden des MLS-Signals enthalten.

Unabhängig von der Anzahl der MLS-Segmente sowie deren (zeitlicher) Länge, werden die MLS-Segmente über jeweilige Signalausgabeeinrichtungen in unterschiedlichen Ab- bzw. Reihenfolgen ausgegeben. Über eine erste Signalausgabeeinrichtung wird sonach eine erste Abfolge der MLS-Segmente und über eine weitere (oder zweite) Signalausgabeeinrichtung eine von der ersten Abfolge unterschiedliche weitere (oder zweite) Abfolge der MLS-Segmente ausgegeben.

Die Ausgabe der MLS-Segmente in unterschiedlichen Ab- bzw. Reihenfolgen beruht auf einer Verschiebung ("circular shift") der einzelnen MLS-Segmente. Die MLS-Segmente werden also nicht beliebig vertauscht. Für eine gegebene Anzahl an z. B. drei MLS-Segmenten wird ausgehend von einer ersten Ab- bzw. Reihenfolge (erstes MLS-Segment, zweites MLS-Segment, drittes MLS-Segment) eine zweite Ab- bzw. Reihenfolge gebildet, indem das erste MLS-Segment auf die "Position" des zweiten MLS-Segments in der ersten Ab- bzw. Reihenfolge, das zweite MLS-Segment auf die "Position" des dritten MLS-Segments in der ersten Ab- bzw. Reihenfolge und das dritte MLS-Segment auf die "Position" des ersten MLS-Segments in der ersten Ab- bzw. Reihenfolge verschoben wird. Eine dritte Ab- bzw. Reihenfolge wird gebildet, indem das erste MLS-Segment weiter auf die "Position" des dritten MLS-Segments in der ersten Ab- bzw. Reihenfolge, das zweite MLS-Segment auf die "Position" des ersten MLS-Segments in der ersten Ab- bzw. Reihenfolge und das dritte MLS-Segment auf die "Position" des zweiten MLS-Segments in der ersten Ab- bzw. Reihenfolge verschoben wird. Entsprechend bestimmt sich die Anzahl unterschiedlicher Ab- bzw. Reihenfolgen aus der Anzahl der MLS-Segmente.

Bezug nehmend auf das vorstehende Beispiel eines MLS-Signals mit einer (zeitlichen) Länge von 20 Sekunden, welches in ein die ersten 3 Sekunden des MLS-Signals enthaltendes erstes MLS-Segment, ein die zweiten drei Sekunden des MLS-Signals enthaltendes zweites MLS-Segment, ein die dritten drei Sekunden des MLS-Signals enthaltendes drittes MLS-Segment und ein die übrigen elf Sekunden des MLS-Signals enthaltendes viertes MLS-Segment unterteilt ist, kann über eine erste Signalausgabeeinrichtung z. B. eine Abfolge: erstes MLS-Segment, zweites MLS-Segment, drittes MLS-Segment, viertes MLS-Segment ausgegeben werden. Über eine zweite Signalausgabeeinrichtung kann z. B. eine Abfolge: zweites MLS-Segment, drittes MLS-Segment, viertes MLS-Segment, erstes MLS-Segment ausgegeben werden. Über eine dritte Signalausgabeeinrichtung kann z. B. eine Abfolge: drittes MLS-Segment, viertes MLS-Segment, erstes MLS-Segment, zweites MLS-Segment ausgegeben werden.

Zur Ermittlung der Abfolge der empfangenen MLS-Segmente, d. h. insbesondere auch zur Ermittlung der einzelnen MLS-Segmente, werden geeignete Auswerte- und Zuordnungsalgorithmen verwendet. Die Ermittlung der Abfolge der MLS-Segmente und die Zuordnung empfangener Abfolgen von MLS-Segmenten zu jeweiligen Signalausgabeeinrichtungen ist wiederum auf Grundlage der besonderen Korrelationseigenschaften von MLS-Signalen möglich.

Die Erfindung betrifft ferner eine Vorrichtung zur Ermittlung der Raumimpulsantwort nach Anspruch 9.

Die Vorrichtung umfasst sämtliche zur Durchführung des Verfahrens erforderlichen Bestandteile. Die Bestandteile der Vorrichtung können hard- und/oder softwaremäßig implementiert sein. Die Vorrichtung zeichnet sich insbesondere durch die folgenden Bestandteile aus:
- wenigstens eine z. B. als Lautsprecher ausgebildete oder wenigstens einen solchen umfassende Signalausgabeeinrichtung, welche zur gleichzeitigen Ausgabe wenigstens eines MLS-Signals und wenigstens eines von dem MLS-Signal unterschiedlichen Audiosignals in ein Raumvolumen, dessen Raumimpulsantwort zu ermitteln ist, wobei durch die gleichzeitige Ausgabe des wenigstens einen MLS-Signals und des wenigstens Audiosignals ein das wenigstens eine MLS-Signal und das wenigstens eine Audiosignal enthaltendes Kombinationssignal erzeugt wird, eingerichtet ist,
- wenigstens eine Ermittlungs- bzw. Extrahierungseinrichtung, welche zur (direkten) Ermittlung bzw. Extrahierung der Raumimpulsantwort des Raumvolumens aus dem Kombinationssignal eingerichtet ist.

Weitere Bestandteile der Vorrichtung sind insbesondere wenigstens eine z. B. als Mikrofon ausgebildete oder wenigstens ein solches umfassende Signalempfangseinrichtung, eine Schwächungseinrichtung zur Schwächung des MLS-Signals durch einen statischen oder dynamischen Schwächungsfaktor und eine Anpassungseinrichtung zur Anpassung eines MLS-Signals an ein Audiosignal.

Die Ermittlungseinrichtung sowie weitere Bestandteile der Vorrichtung können, gegebenenfalls als gemeinsame Bestandteile einer übergeordneten Steuereinrichtung, implementiert sein.

Wie sich im Weiteren ergibt, kann die Vorrichtung Teil einer Audioeinrichtung bzw. eines Audiosystems für ein Kraftfahrzeug sein.

Die Erfindung betrifft weiterhin eine Audioeinrichtung nach Anspruch 10.

Kraftfahraougi Die Audioeinrichtung kann Teil einer kraftfahrzeugseitigen Multimediaeinrichtung zur Ausgabe von Multimediainhalten, insbesondere von Audio- und/oder Videoinhalten, an einen Insassen sein. Die Audioeinrichtung umfasst wenigstens eine Signalausgabeeinrichtung, welche zur Ausgabe von Audiosignalen in einen wenigstens einen Teil einer Fahrgastzelle bildenden Innenraum eines Kraftfahrzeugs eingerichtet ist. Die Audioeinrichtung zeichnet sich dadurch aus, dass sie wenigstens eine Vorrichtung zur Ermittlung der Raumimpulsantwort eines ein bestimmtes Raumvolumen aufweisenden, insbesondere geschlossenen, Innenraums (des Kraftfahrzeugs) aufweist, wobei die Ausgabe von Audiosignalen auf Grundlage der von der Vorrichtung ermittelten Raumimpulsantwort erfolgt.

Sowohl für die Vorrichtung zur Ermittlung der Raumimpulsantwort als auch für die Audioeinrichtung gelten sämtliche Ausführungen im Zusammenhang mit dem Verfahren analog.

Die Erfindung ist anhand von Ausführungsbeispielen in den Zeichnungsfiguren näher erläutert. Dabei zeigen:
- Fig. 1, 2: je eine Prinzipdarstellung einer Vorrichtung zur Durchführung eines Verfahrens gemäß einem Ausführungsbeispiel;
- Fig. 3: eine Prinzipdarstellung eines Kombinationssignals, wie es im Rahmen eines verfahrensgemäßen Ausführungsbeispiels erzeugt wird; und
- Fig. 4: eine Prinzipdarstellung eines beispielhaften MLS-Signals, wie es im Rahmen eines verfahrensgemäßen Ausführungsbeispiels in unterschiedliche MLS-Segmente unterteilt wird.

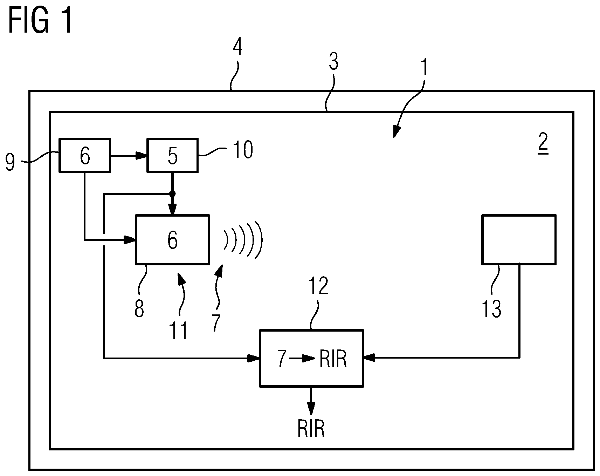

Fig. 1 zeigt eine Prinzipdarstellung einer Vorrichtung 1 zur Durchführung eines Ausführungsbeispiels eines Verfahrens zur Ermittlung der Raumimpulsantwort RIR eines ein bestimmtes Raumvolumen 2 aufweisenden, insbesondere geschlossenen, Innenraums 3. Bei dem Innenraum 3 kann es sich z. B. um eine Fahrgastzelle eines Kraftfahrzeugs 4 handeln.

In dem ersten Schritt des Verfahrens wird gleichzeitig bzw. simultan ein MLS-Signal 5 und ein von dem MLS-Signal 5 unterschiedliches Audiosignal 6, bei welchem es sich z. B. um ein Musikstück handeln kann, in den im Hinblick auf seine Raumimpulsantwort RIR zu untersuchenden Innenraum 3 bzw. in das im Hinblick auf seine Raumimpulsantwort RIR zu untersuchende Raumvolumen 2 ausgegeben. Mit anderen Worten wird verfahrensgemäß das MLS-Signal 5 während der Ausgabe des Audiosignals 6 ausgegeben. Durch die in dem ersten Schritt des Verfahrens erfolgende simultane Ausgabe des MLS-Signals 5 und des Audiosignals 6 wird in dem Raumvolumen 2 ein Kombinationssignal 7 erzeugt, welches das MLS-Signal 5 und das Audiosignal 6 enthält.

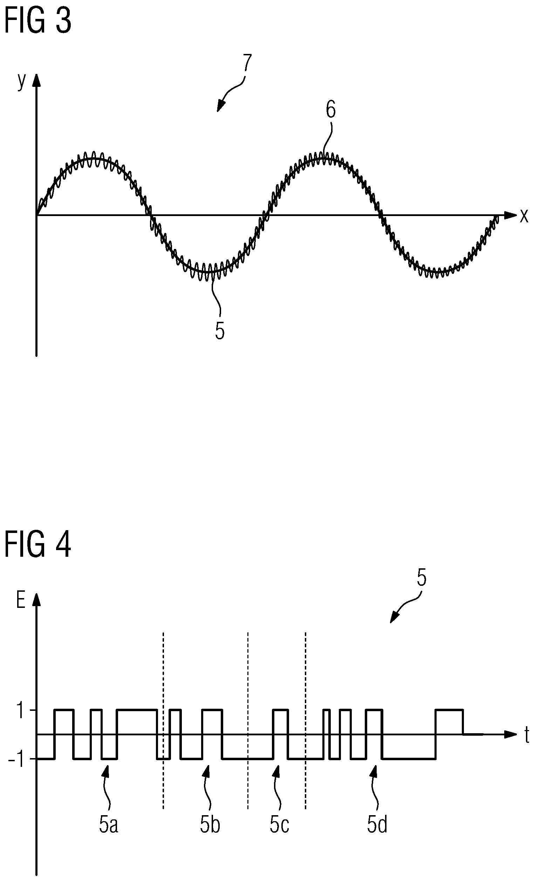

Ein entsprechendes Kombinationssignal 7 ist in Fig. 3 in einer Prinzipdarstellung gezeigt. Ersichtlich ist das MLS-Signal 5 psychoakustisch betrachtet mit dem Audiosignal 6 maskiert, sodass das MLS-Signal 5, wie im Weiteren noch erläutert wird, für das menschliche Ohr nicht oder kaum hörbar ist.

Die (zeitliche) Länge und die sich hieraus ergebende Energie des ausgegebenen MLS-Signals 5 ist grundsätzlich variabel. Das verwendete MLS-Signal 5 kann beispielsweise eine (zeitliche) Länge in einem Bereich zwischen 10 und 90 Sekunden, insbesondere eine (zeitliche) Länge zwischen 20 und 60 Sekunden, aufweisen.

Das MLS-Signal 5 wird mit einer im Vergleich zu dem Audiosignal 6 geringeren Energie, insbesondere mit einer geringeren Lautstärke, ausgegeben. Das MLS-Signal 5 wird insbesondere in einem Energie- bzw. Lautstärkebereich ausgegeben, in dem es, insbesondere auch bei isolierter Ausgabe ohne das Audiosignal 6, für das menschliche Ohr nicht oder kaum hörbar ist. Konkret kann das MLS-Signal 5 z. B. in einem Energie- bzw. Lautstärkebereich unterhalb -10 dB, bevorzugt unterhalb ca. -20 dB, im Verhältnis zu dem Audiosignal 6 ausgegeben. Das Kombinationssignal 7 enthält entsprechend einen hörbaren Anteil in Form des Audiosignals 6 und einen nicht oder kaum hörbaren Anteil in Form des MLS-Signals 5. Die simultane Ausgabe des MLS-Signals 5 und des Audiosignals 6 beeinträchtigt das Hörvergnügen eines Rauminsassen sonach nicht. Ein Rauminsasse nimmt akustisch nur den durch das Audiosignal 6 gegebenen hörbaren Anteil wahr.

Die gleichzeitige Ausgabe des MLS-Signals 5 und des Audiosignals 6 kann kontinuierlich oder diskontinuierlich, d. h. nur zu bestimmten vorgebbaren oder vorgegebenen Zeitpunkten und/oder nur für eine bestimmte vorgebbare oder vorgegebene Zeitdauer erfolgen, wobei im Übrigen nur das Audiosignal 6 ausgegeben wird. Der erste Schritt des Verfahrens kann demnach z. B. implementiert werden, indem während der Ausgabe eines beliebigen Audiosignals 6 zumindest zeitweise zusätzlich ein MLS-Signal 5 ausgegeben wird.

Verfahrensgemäß werden zur Ausgabe des MLS-Signals 5 und des Audiosignals 6 Signalausgabeeinrichtungen 8 verwendet. Die Zuführung ein- oder mehrkanaliger Audiosignale 6 zu einer Signalausgabeeinrichtung 8 erfolgt über eine Audioquelle 9.

Bei einem Audiosignal 6 kann es sich z. B. um eine Musik- und/oder Textinformation, d. h. z. B. um ein Musikstück, ein gesprochenes Stück, d. h. z. B. ein Hörspiel oder ein (weitgehend) gesprochener Beitrag, etc. handeln. Als Audiosignal kann sonach ein von einem analogen oder digitalen Informationsträger, insbesondere einer Kassette, einer CD, einem mobilen Endgerät, wie einem Laptop, Smartphone, Tablet-PC, etc., einem portablen oder nicht-portablen Speichergerät, wie einem USB-Stick, oder von einem externen Datenspeicher, insbesondere einem Kommunikationsnetzwerkspeicher, wie einem "Cloud-Speicher", abspielbares bzw. empfangbares bzw. herunterladbares Musik- und/oder Textinformation beinhaltendes Signal verwendet werden. Entsprechend kann es sich bei einer Audioquelle 9 um jedwede Art von Wiedergabeeinrichtung entsprechender akustischer Signale, d. h. z. B. um einen CD-Spieler oder ein Radiogerät, handeln.

Die Zuführung von MLS-Signalen 5 zu der Signalausgabeeinrichtung 8 erfolgt, insbesondere direkt, über die MLS-Quelle 10. Entsprechende Signalausgabeeinrichtungen 8 können als Lautsprecher ausgebildet sein oder solche umfassen. Die Signalausgabeeinrichtungen 8 können Teil einer kraftfahrzeugseitigen Audioeinrichtung 11 zur Ausgabe von akustischen Informationen sein. Die Audioeinrichtung 11 kann wiederum Teil einer kraftfahrzeugseitigen Multimediaeinrichtung (nicht gezeigt) zur Ausgabe von Multimediainhalten sein.

In dem zweiten Schritt des Verfahrens wird die Raumimpulsantwort RIR direkt aus dem Kombinationssignal 7 ermittelt bzw. extrahiert. Für die Ermittlung bzw. Extrahierung der Raumimpulsantwort RIR aus dem Kombinationssignal 7 wird sich verfahrensgemäß zunutze gemacht, dass das MLS-Signal 5 sehr gute Auto-Korrelationseigenschaften aufweist und grundsätzlich nicht mit sich selbst korrelierbar bzw. korreliert ist. Ferner ist das MLS-Signal 5 nicht (oder kaum) mit dem Audiosignal 6 korrelierbar bzw. korreliert. Dies ist wesentliche Voraussetzung für die direkte Ermittlung bzw. Extrahierung der Raumimpulsantwort RIR aus dem Kombinationssignal 7.

Die Ermittlung der Raumimpulsantwort RIR erfolgt über eine hard- und/oder softwaremäßig implementierte Ermittlungseinrichtung 12, welche einen Bestandteil einer zentralen Steuereinrichtung (nicht gezeigt) der Vorrichtung 1 bilden kann. Die Ermittlungseinrichtung 12 erhält über geeignete Signalverbindungen einerseits das MLS-Signal 5 und andererseits das über eine Signalempfangseinrichtung 13 empfangene Kombinationssignal 7. Zur Extrahierung des MLS-Signals 5 verfügt die Extrahierungseinrichtung 10 über geeignete Transformations- bzw. Faltungssalgorithmen, wie z. B. (schnelle) Fourier-Transformations-Algorithmen oder (schnelle) Hadamard-Transformations-Algorithmen. Über entsprechende Algorithmen können an und für sich bekannte Methoden zur Ermittlung der Raumimpulsantwort RIR aus MLS-Signalen 5 implementiert werden, wie sie z. B. in dem Fachartikel "Maximum Length Sequence" von Ole Herman Bjor, Copyright Norsonic AS 1995 - 2000, abzurufen unter http://www.gracey.co.uk/downloads/nor_mls_theory.pdf, beschrieben sind.

Wie erwähnt, wird das MLS-Signal 5 mit einer im Vergleich zu dem Audiosignal 6 geringeren Energie, insbesondere einer geringeren Lautstärke, und sonach mit einer bestimmten Schwächung, d. h. geschwächt, ausgegeben. Das MLS-Signal 5 wird also in Abhängigkeit eines Schwächungskriteriums durch einen statischen oder dynamischen Schwächungsfaktor geschwächt ausgegeben. Unter einer Schwächung des MLS-Signals 5 ist eine Reduzierung der Energie bzw. der Lautstärke des MLS-Signals 5 unter einen bestimmten Grenzwert zu verstehen. Ein entsprechender Grenzwert kann beispielsweise bei -20 dB im Verhältnis zu dem Audiosignal 6 liegen. Der Energiebereich des MLS-Signals 5 lässt sich in Abhängigkeit eines Schwächungskriteriums bzw. eines Schwächungsfaktors sonach gezielt einstellen bzw. anpassen. Eine entsprechende Schwächung erfolgt über eine hard- und/oder softwaremäßig implementierte Schwächungseinrichtung (nicht gezeigt).

Als Schwächungskriterium kann ein akustischer Parameter des Audiosignals 6, insbesondere die aktuelle, mittlere oder (nach einer vermittels geeigneter Analysealgorithmen durchgeführten Lautstärkenanalyse vorausberechnete) künftige Lautstärke des Audiosignals 6, verwendet werden. Jedoch wird als

Schwächungskriterium ein die akustischen Eigenschaften, insbesondere die Raumimpulsantworteigenschaften, des Innenraums 3 beeinflussender Parameter, nämlich ein physikalischer Parameter, wie z. B. Atmosphäre, Druck, Feuchtigkeit, Temperatur, etc. und/oder das freie Raumvolumen des Innenraums 3, verwendet.

werden. Das freie Raumvolumen des Innenraums 3 ist indirekt proportional zu einem Objektfüllgrad des Raumvolumens 2 mit Objekten. Der Objektfüllgrad beschreibt die Anordnung von belebten und/oder unbelebten Objekten innerhalb des Innenraums 3 relativ zu dem freien Raumvolumen des leeren Innenraums 3.

Alternativ oder ergänzend zu einer entsprechenden Schwächung des MLS-Signals 5 kann das MLS-Signal 5 in Abhängigkeit eines Anpassungskriteriums durch einen statischen oder dynamischen Anpassungsfaktor angepasst an das wenigstens eine Audiosignal 6 ausgegeben werden. Unter einer Anpassung des MLS-Signals 5 ist eine Erhöhung oder Reduzierung der Energie bzw. der Lautstärke des MLS-Signals 5 relativ zu der Energie bzw. Lautstärke des Audiosignals 6 zu verstehen. Eine entsprechende Anpassung erfolgt über eine hard- und/oder softwaremäßig implementierte Anpassungseinrichtung (nicht gezeigt).

Auch als Anpassungskriterium kann ein akustischer Parameter des Audiosignals 6, insbesondere die aktuelle, gemittelte bzw. mittlere oder (nach einer vermittels geeigneter Analysealgorithmen durchgeführten Lautstärkenanalyse vorausberechnete) künftige Lautstärke des Audiosignals 6, verwendet werden. Jedoch wird als Anpassungskriterium ein die akustischen Eigenschaften, insbesondere die Raumimpulsantworteigenschaften, des Innenraums 3 beeinflussender Parameter, nämlich ein physikalischer Parameter, wie z. B. Atmosphäre, Druck, Feuchtigkeit, Temperatur, etc. und/oder das freie Raumvolumen des Innenraums 3, verwendet.

Zweckmäßig erfolgt die Anpassung des MLS-Signals 5 an das Audiosignal 6 derart, dass, insbesondere bis zu einer vorgebbaren oder vorgegebenen Maximalenergie bzw. Maximallautstärke des MLS-Signals 5, stets ein konstantes Verhältnis zwischen der Energie bzw. Lautstärke des MLS-Signals 5 und der Energie bzw. Lautstärke des Audiosignals 6 gegeben ist. Hierfür kann eine vermittels eines geeigneten Analysealgorithmus durchgeführte Lautstärkenanalyse des Audiosignals 6 erforderlich sein, welcher eine entsprechende Anpassung des MLS-Signals 5 folgt. Eine Maximalenergie bzw. Maximallautstärke des MLS-Signals 5 wird typischerweise derart vorgegeben, dass das MLS-Signal 5 für das menschliche Ohr (weitgehend) unhörbar bleibt. In dem Sonderfall eines besonders schwachen ("leisen") Audiosignals wird zweckmäßig darauf geachtet, dass das MLS-Signal einen bestimmten Energieschwellwert nicht unterschreitet.

Entsprechende Schwächungen bzw. Anpassungen des MLS-Signals 5 z. B. über eine erwähnte Steuereinrichtung gesteuert werden. Die hierzu erforderlichen Schwächungs- bzw. Anpassungseinrichtungen (nicht gesondert gezeigt) können sonach hard- und/oder softwaremäßig implementierte Bestandteile einer entsprechenden Steuereinrichtung sein.

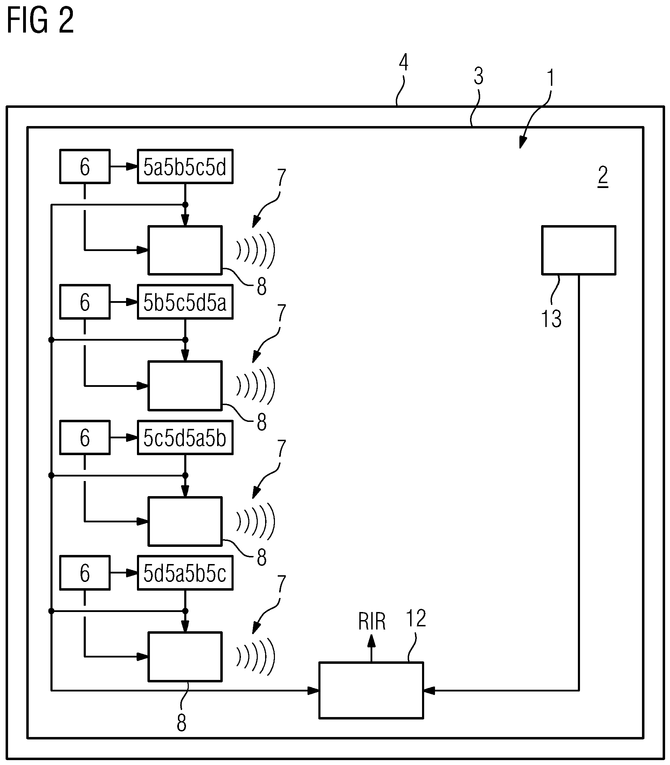

Fig. 2 zeigt eine Prinzipdarstellung einer Vorrichtung 1 zur Durchführung eines weiteren Ausführungsbeispiels eines Verfahrens zur Ermittlung der Raumimpulsantwort RIR eines ein bestimmtes Raumvolumen 2 aufweisenden, insbesondere geschlossenen, Innenraums 3.

In Fig. 2 ist die denkbare Möglichkeit dargestellt, dass mehrere - nämlich beispielsweise vier - Signalausgabeeinrichtungen 8 verwendet werden. Sofern mehrere Signalausgabeeinrichtungen 8 verwendet werden, besteht die Möglichkeit, über einzelne, mehrere oder sämtliche Signalausgabeeinrichtungen 8 gleichzeitig ein MLS-Signal 5 und ein Audiosignal 6 auszugeben. Die über jeweilige Signalausgabeeinrichtungen 8 ausgegebenen MLS-Signale 5 müssen sich unterscheiden, die über jeweilige Signalausgabeeinrichtungen 8 ausgegebenen Audiosignale 6 können sich gleichen oder unterscheiden. Alternativ zu der jeweils gleichzeitigen Ausgabe von MLS-Signalen 5 und Audiosignalen 6 über einzelne Signalausgabeeinrichtungen 8 ist es jedoch auch denkbar, über eine erste Signalausgabeeinrichtung 8 nur (ein) MLS-Signal(e) 5 und über eine weitere Signalausgabeeinrichtung 8 nur (ein) Audiosignal(e) 6 auszugeben.

Die Zuordnung von wenigstens von einer als Mikrofon ausgebildeten oder wenigstens ein solches umfassenden Signalempfangseinrichtung 13 empfangenen unterschiedlichen MLS-Signale 5 zu jeweiligen Signalausgabeeinrichtungen 8 erfolgt über eine entsprechend hard- und/oder softwaremäßig konfigurierte Ermittlungseinrichtung, welche, wie erwähnt, einen Bestandteil einer zentralen Steuereinrichtung der Vorrichtung 1 bilden kann. Die Ermittlungseinrichtung 12 erhält die MLS-Signale über geeignete Signalverbindungen. Die Zuordnung empfangener MLS-Signale 5 zu jeweiligen Signalausgabeeinrichtungen 8 ist auf Grundlage der besonderen Korrelationseigenschaften von MLS-Signalen 5 möglich.

Für den in Fig. 2 gezeigten Fall, in dem mehrere Signalausgabeeinrichtungen 8 zur Ausgabe eines MLS-Signals 5 und eines Audiosignals 6 verwendet werden, ist nachfolgend erläuterte Vorgehensweise denkbar (in diesem Zusammenhang ist auch auf Fig. 4, welche eine Prinzipdarstellung eines beispielhaften MLS-Signals 5 zeigt, zu verweisen): Es wird ein (einziges) MLS-Signal 5 verwendet.

Ausgehend von dem Nullpunkt der in Fig. 4 auf der x-Achse aufgetragenen Zeit t hat das verwendete MLS-Signal 5 eine bestimmte (zeitliche) Länge T von z. B. 20 Sekunden. Das MLS-Signal 5 wird in eine Anzahl an MLS-Segmenten 5a - 5d - in dem in Fig. 4 gezeigten Ausführungsbeispiel vier MLS-Segmente 5a - 5d - unterteilt. Grundsätzlich können sich die (zeitlichen) Längen der jeweiligen MLS-Segmente 5a - 5d gleichen oder unterscheiden.

Anhand von Fig. 4 ist ersichtlich, dass zweckmäßig ein bipolares MLS-Signal 5 verwendet wird. Die Zweckmäßigkeit eines bipolaren MLS-Signals 5 ergibt sich daraus, dass derart Gleichspannungskomponenten vermieden werden, welche die Qualität des ermittelten Raumimpulsantwort RIR beeinträchtigen.

Für das in Fig. 4 gezeigte Beispiel eines MLS-Signals 5 mit einer (zeitlichen) Länge von 20 Sekunden, enthält das erste MLS-Segment 5a die ersten 3 Sekunden des MLS-Signals 5, das zweite MLS-Segment 5b die zweiten drei Sekunden des MLS-Signals 5, das dritte MLS-Segment 5c die dritten drei Sekunden des MLS-Signals 5 und das vierte MLS-Segment 5d die übrigen elf Sekunden des MLS-Signals 5.

Die MLS-Segmente 5a - 5d werden über jeweilige Signalausgabeeinrichtungen 8 in unterschiedlichen Ab- bzw. Reihenfolgen ausgegeben: Über die erste Signalausgabeeinrichtung 8 wird eine erste Abfolge der MLS-Segmente 5a - 5d, über die zweite Signalausgabeeinrichtung 8 eine von der ersten Abfolge unterschiedliche zweite Abfolge der MLS-Segmente 5a - 5d und so fort ausgegeben. Konkret kann über die erste Signalausgabeeinrichtung 8 z. B. eine Abfolge: erstes MLS-Segment 5a, zweites MLS-Segment 5b, drittes MLS-Segment 5c, viertes MLS-Segment 5d ausgegeben werden. Über die zweite Signalausgabeeinrichtung 8 kann z. B. eine Abfolge: zweites MLS-Segment 5b, drittes MLS-Segment 5c, viertes MLS-Segment 5d, erstes MLS-Segment 5a ausgegeben werden. Über die dritte Signalausgabeeinrichtung 8 kann z. B. eine Abfolge: drittes MLS-Segment 5c, viertes MLS-Segment 5d, erstes MLS-Segment 5a, zweites MLS-Segment 5b ausgegeben werden. Über die vierte Signalausgabeeinrichtung 8 kann z. B. eine Abfolge: viertes MLS-Segment 5d, erstes MLS-Segment 5a, zweites MLS-Segment 5b, drittes MLS-Segment 5c ausgegeben werden.

Die Ausgabe der MLS-Segmente 5a - 5d in unterschiedlichen Ab- bzw. Reihenfolgen beruht auf einer Verschiebung ("circular shift") der einzelnen MLS-Segmente 5a - 5d. Die MLS-Segmente 5a - 5d werden also nicht beliebig vertauscht. Entsprechend ergibt sich die mögliche Anzahl unterschiedlicher Ab- bzw. Reihenfolge aus der Anzahl der MLS-Segmente 5a - 5d.

Zur Ermittlung der Abfolge der MLS-Segmente 5a - 5d wird die Ermittlungseinrichtung 11 verwendet, welche auf Grundlage der von der Signalempfangseinrichtung 13 empfangenen Abfolgen jeweiliger MLS-Segmente 5a - 5d eine Zuordnung der empfangenen MLS-Segmente 5a - 5d zu jeweiligen Signalausgabeeinrichtungen 8 vornimmt. Zur Ermittlung der Abfolge der MLS-Segmente 5a - 5d, d. h. insbesondere auch zur Ermittlung der einzelnen MLS-Segmente 5a - 5d, werden geeignete Auswerte- und Zuordnungsalgorithmen verwendet. Die Ermittlung der Abfolge der MLS-Segmente 5a - 5d und die hiernach erfolgende Zuordnung empfangener Abfolgen von MLS-Segmenten 5a - 5d zu jeweiligen Signalausgabeeinrichtungen 8 ist wiederum auf Grundlage der besonderen Korrelationseigenschaften von MLS-Signalen 5 möglich.

Wenngleich in den Fig. 1, 2 nicht gezeigt, ist es selbstverständlich möglich, dass ein MLS-Signal 5 und/oder ein Audiosignal 6 vor Ausgaben in den Innenraum 5 einer Signalvorverarbeitungseinrichtung (nicht gezeigt) zugeführt wird, vermittels welcher eine Signalvorverarbeitung, d. h. z. B. eine Signalverstärkung, eine Signalumwandlung eines analogen Signals in ein digitales Signal, etc., durchgeführt wird.

### BEZUGSZEICHENLISTE

- 1: Vorrichtung
- 2: Raumvolumen
- 3: Innenraum
- 4: Kraftfahrzeug
- 5: MLS-Signal
- 5a: MLS-Segment
- 5b: MLS-Segment
- 5c: MLS-Segment
- 5d: MLS-Segment
- 6: Audiosignal
- 7: Kombinationssignal
- 8: Signalausgabeeinrichtung
- 9: Audioquelle
- 10: MLS-Quelle
- 11: Audioeinrichtung
- 12: Ermittlungseinrichtung
- 13: Signalempfangseinrichtung

## Patentansprüche

1. Verfahren zur Ermittlung der Raumimpulsantwort, RIR, einer ein bestimmtes Raumvolumen (2) aufweisenden Fahrgastzelle eines Kraftfahrzeugs (4), umfassend folgende Schritte:
- gleichzeitiges Ausgeben wenigstens eines Maximum-Length-Sequence-Signals, MLS-Signals, (5) und wenigstens eines von dem MLS-Signal (5) unterschiedlichen Audiosignals (6) in ein Raumvolumen (2) einer Fahrgastzelle eines Kraftfahrzeugs (4), deren Raumimpulsantwort zu ermitteln ist, wobei durch die gleichzeitige Ausgabe des wenigstens einen MLS-Signals (5) und des wenigstens einen Audiosignals (6) ein das wenigstens eine MLS-Signal (5) und das wenigstens eine Audiosignal (6) enthaltendes Kombinationssignal (7) erzeugt wird,
- Ermitteln der Raumimpulsantwort der Fahrgastzelle des Kraftfahrzeugs (4) aus dem Kombinationssignal (7), wobei
das wenigstens eine MLS-Signal (5) in Abhängigkeit wenigstens eines Schwächungskriteriums durch einen statischen oder dynamischen Schwächungsfaktor geschwächt ausgegeben wird, und/oder
das wenigstens eine MLS-Signal (5) in Abhängigkeit wenigstens eines Anpassungskriteriums durch einen statischen oder dynamischen Anpassungsfaktor angepasst an das wenigstens eine Audiosignal (6) ausgegeben wird
**dadurch gekennzeichnet, dass** als Schwächungskriterium wenigstens ein die akustischen Eigenschaften der Fahrgastzelle beeinflussender Parameter, nämlich ein physikalischer Parameter, und/oder das freie Raumvolumen der Fahrgastzelle, verwendet wird, und wobei als Anpassungskriterium wenigstens ein die akustischen Eigenschaften der Fahrgastzelle beeinflussender Parameter, nämlich ein physikalischer Parameter, und/oder das freie Raumvolumen der Fahrgastzelle, verwendet wird.

2. Verfahren nach Anspruch 1, **dadurch gekennzeichnet, dass** das wenigstens eine MLS-Signal (5) mit einer im Vergleich zu dem wenigstens einen Audiosignal (6) geringeren Energie, insbesondere einer geringeren Lautstärke, ausgegeben wird.

3. Verfahren nach Anspruch 1 oder 2, **dadurch gekennzeichnet, dass** die gleichzeitige Ausgabe des wenigstens einen MLS-Signals (5) und des wenigstens einen Audiosignals (6) nur zu bestimmten vorgebbaren oder vorgegebenen Zeitpunkten und/oder nur für eine bestimmte vorgebbare oder vorgegebene Zeitdauer erfolgt, wobei im Übrigen nur das Audiosignal (6) ausgegeben wird.

4. Verfahren nach einem der vorhergehenden Ansprüche, **dadurch gekennzeichnet, dass** eine Anpassung des MLS-Signals (5) an das Audiosignal (6) derart erfolgt, dass, insbesondere bis zu einer Maximalenergie des MLS-Signals (5), stets ein konstantes Verhältnis zwischen der Energie des MLS-Signals (5) und der Energie des Audiosignals (6) gegeben ist.

5. Verfahren nach einem der vorhergehenden Ansprüche, **dadurch gekennzeichnet, dass** ein MLS-Signal (5) mit einer Länge zwischen 10 und 90s, insbesondere einer Länge zwischen 20 und 60s, verwendet wird.

6. Verfahren nach einem der vorhergehenden Ansprüche, **dadurch gekennzeichnet, dass** mehrere Signalausgabeeirichtungen (8) zur jeweiligen Ausgabe wenigstens eines MLS-Signals (5) und/oder wenigstens eines Audiosignals (6) verwendet werden, wobei über wenigstens zwei Signalausgabeeirichtungen (8) gleichzeitig wenigstens ein MLS-Signal (5) und wenigstens ein Audiosignal (6) ausgegeben wird.

7. Verfahren nach einem der vorhergehenden Ansprüche, **dadurch gekennzeichnet, dass** ein MLS-Signal (5) einer bestimmten Länge verwendet wird, wobei das MLS-Signal (5) in wenigstens zwei, insbesondere zeitlich unterschiedlich lange, MLS-Segmente (5a - 5d) unterteilt wird, wobei die wenigstens zwei MLS-Segmente (5a - 5d) über eine erste Signalausgabeeirichtung (8) in einer ersten Abfolge und über wenigstens eine weitere Signalausgabeeirichtung (8) in einer von der ersten Abfolge verschiedenen weiteren Abfolge ausgegeben werden.

8. Verfahren nach Anspruch 7, **dadurch gekennzeichnet, dass** auf Grundlage der von wenigstens einer Signalempfangseinrichtung (13) empfangenen unterschiedlichen Abfolge jeweiliger MLS-Segmente (5a - 5d) eine Zuordnung der empfangenen MLS-Segmente (5a - 5d) zu jeweiligen Signalausgabeeinrichtungen (8) vornimmt.

9. Vorrichtung (1), **dadurch gekennzeichnet, dass** die Vorrichtung (1) zur Durchführung eines Verfahrens zur Ermittlung der Raumimpulsantwort, RIR, einer ein bestimmtes Raumvolumen (2) aufweisenden Fahrgastzelle eines Kraftfahrzeugs (4) nach einem der vorhergehenden Ansprüche eingerichtet ist, wobei die Vorrichtung (1):
- wenigstens eine Signalausgabeeinrichtung (8), welche zur gleichzeitigen Ausgabe wenigstens eines Maximum-Length-Sequence-Signals, MLS-Signals, (5) und wenigstens eines von dem MLS-Signal (5) unterschiedlichen Audiosignals (6) in ein Raumvolumen (2) einer Fahrgastzelle eines Kraftfahrzeugs (4), deren Raumimpulsantwort zu ermitteln ist, wobei durch die gleichzeitige Ausgabe des wenigstens einen MLS-Signals (5) und des wenigstens Audiosignals (6) ein das wenigstens eine MLS-Signal (5) und das wenigstens eine Audiosignal (6) enthaltendes Kombinationssignal (7) erzeugt wird, eingerichtet ist, und
- wenigstens eine Ermittlungseinrichtung (12), welche zum Ermitteln der Raumimpulsantwort der Fahrgastzelle des Kraftfahrzeugs (4) aus dem Kombinationssignal (7) eingerichtet ist,
umfasst.

10. Audioeinrichtung (11) für ein eine Fahrgastzelle aufweisendes Kraftfahrzeug (4), umfassend wenigstens eine Signalausgabeeinrichtung (8), welche zur Ausgabe von Audiosignalen (6) in die Fahrgastzelle des Kraftfahrzeugs (4) eingerichtet ist, **dadurch gekennzeichnet, dass** sie wenigstens eine Vorrichtung (1) nach Anspruch 9 aufweist, wobei die Ausgabe von Audiosignalen (6) auf Grundlage der von der Vorrichtung (1) ermittelten Raumimpulsantwort erfolgt.

## Claims

1. Method for determining the room impulse response, RIR, of a passenger compartment of a motor vehicle (4) having a specific spatial volume (2), comprising the following steps:
- simultaneously outputting at least one maximum length sequence signal, MLS signal, (5) and at least one audio signal (6) differing from the MLS signal (5) to a spatial volume (2) of a passenger compartment of a motor vehicle (4) for which the room impulse response is to be determined, wherein the simultaneous output of the at least one MLS signal (5) and the at least one audio signal (6) generates a combined signal (7) containing the at least one MLS signal (5) and the at least one audio signal (6),
- determining the room impulse response of the passenger compartment of the motor vehicle (4) from the combined signal (7), wherein the at least one MLS signal (5) is output in an attenuated manner by a static or dynamic attenuation factor depending on at least one attenuation criterion,
and/or
the at least one MLS signal (5) is output in manner adjusted to the at least one audio signal (6) by a static or dynamic adjustment factor depending on at least one adjustment criterion,
**characterized in that** at least one parameter influencing the acoustic properties of the passenger compartment, specifically a physical parameter, and/or the free spatial volume of the passenger compartment, is used as the attenuation criterion, and at least one parameter influencing the acoustic properties of the passenger compartment, specifically a physical parameter, and/or the free spatial volume of the passenger compartment, is used as the adjustment criterion.

2. Method according to claim 1, **characterized in that** the at least one MLS signal (5) is output with a lower energy in comparison to the at least one audio signal (6), in particular a lower volume.

3. Method according to claim 1 or 2, **characterized in that** the simultaneous output of the at least one MLS signal (5) and the at least one audio signal (6) takes place only at specific predefinable or predefined times and/or only for a specific predefinable or predefined duration, wherein otherwise only the audio signal (6) is output.

4. Method according to one of the preceding claims, **characterized in that** an adjustment of the MLS signal (5) to the audio signal (6) takes place in such a way that, particularly up to a maximum energy of the MLS signal (5), the ratio of the energy of the MLS signal (5) to the energy of the audio signal (6) is always constant.

5. Method according to one of the preceding claims, **characterized in that** an MLS signal (5) having a length of between 10 and 90 s, in particular a length of between 20 and 60 s, is used.

6. Method according to one of the preceding claims, **characterized in that** a plurality of signal output devices (8) are used for the respective output of at least one MLS signal (5) and/or at least one audio signal (6), wherein at least one MLS signal (5) and at least one audio signal (6) are output simultaneously via at least two signal output devices (8).

7. Method according to one of the preceding claims, **characterized in that** an MLS signal (5) of a specific length is used, wherein the MLS signal (5) is divided into at least two MLS segments (5a - 5d), in particular of different temporal lengths, wherein the at least two MLS segments (5a - 5d) are output via a first signal output device (8) in a first sequence and via at least one further signal output device (8) in a further sequence differing from the first sequence.

8. Method according to claim 7, **characterized in that,** based on the differing sequence of respective MLS segments (5a - 5d) received by at least one signal receiving device (13), the MLS segments (5a - 5d) received are allocated to respective signal output devices (8).

9. Device (1), **characterized in that** the device (1) is configured to carry out a method for determining the room impulse response, RIR, of a passenger compartment of a motor vehicle (4) having a specific spatial volume (2) according to one of the preceding claims, wherein the device (1) comprises:
- at least one signal output device (8), which is configured for the simultaneous output of at least one maximum length sequence signal, MLS signal, (5) and at least one audio signal (6) differing from the MLS signal (5) to a spatial volume (2) of a passenger compartment of a motor vehicle (4) for which the room impulse response is to be determined, wherein the simultaneous output of the at least one MLS signal (5) and the at least one audio signal (6) generates a combined signal (7) containing the at least one MLS signal (5) and the at least one audio signal (6), and
- at least one determining device (12), which is configured to determine the room impulse response of the passenger compartment of the motor vehicle (4) from the combined signal (7).

10. Audio device (11) for a motor vehicle (4) having a passenger compartment, comprising at least one signal output device (8), which is configured to output audio signals (6) to the passenger compartment of the motor vehicle (4), **characterized in that** it has at least one device (1) according to claim 9, wherein audio signals (6) are output on the basis of the room impulse response determined by the device (1).

## Revendications

1. Procédé de détermination de la réponse impulsionnelle spatiale, RIR, d'un habitacle d'un véhicule automobile (4) présentant un volume spatial (2) donné, comprenant les étapes suivantes :
- émission simultanée d'au moins un signal de type séquence de longueur maximale, signal MLS, (5) et d'au moins un signal audio (6) différent du signal MLS (5) dans un volume spatial (2) d'un habitacle d'un véhicule automobile (4), dont la réponse impulsionnelle spatiale est à déterminer, un signal combiné (7) contenant l'au moins un signal MLS (5) et l'au moins un signal audio (6) étant généré par l'émission simultanée de l'au moins un signal MLS (5) et de l'au moins un signal audio (6),
- détermination de la réponse impulsionnelle spatiale de l'habitacle du véhicule automobile (4) à partir du signal combiné (7), dans lequel l'au moins un signal MLS (5) est émis atténué par un facteur d'atténuation statique ou dynamique en fonction d'au moins un critère d'atténuation,
et/ou
l'au moins un signal MLS (5) est émis adapté à l'au moins un signal audio (6) par un facteur d'adaptation statique ou dynamique en fonction d'au moins un critère d'adaptation,
**caractérisé en ce qu'**au moins un paramètre influençant les propriétés acoustiques de l'habitacle, à savoir un paramètre physique, et/ou le volume spatial libre de l'habitacle est utilisé comme critère d'atténuation et dans lequel au moins un paramètre influençant les propriétés acoustiques de l'habitacle, à savoir un paramètre physique, et/ou le volume spatial libre de l'habitacle est utilisé comme critère d'adaptation.

2. Procédé selon la revendication 1, **caractérisé en ce que** l'au moins un signal MLS (5) est émis avec une énergie plus faible, en particulier une intensité sonore plus faible, par rapport à l'au moins un signal audio (6).

3. Procédé selon la revendication 1 ou 2, **caractérisé en ce que** l'émission simultanée de l'au moins un signal MLS (5) et de l'au moins un signal audio (6) est effectuée uniquement à des moments donnés prédéfinis ou pouvant être prédéfinis et/ou uniquement pendant une durée donnée prédéfinie ou pouvant être prédéfinie, seul le signal audio (6) étant émis par ailleurs.

4. Procédé selon l'une des revendications précédentes, **caractérisé en ce qu'**une adaptation du signal MLS (5) au signal audio (6) est effectuée de telle manière que, en particulier jusqu'à une énergie maximale du signal MLS (5), un rapport constant entre l'énergie du signal MLS (5) et l'énergie du signal audio (6) est donné.

5. Procédé selon l'une des revendications précédentes, **caractérisé en ce qu'**un signal MLS (5) d'une durée comprise entre 10 et 90 s, en particulier d'une durée comprise entre 20 et 60 s, est utilisé.

6. Procédé selon l'une des revendications précédentes, **caractérisé en ce que** plusieurs systèmes d'émission de signal (8) sont utilisés pour l'émission respective d'au moins un signal MLS (5) et/ou d'au moins un signal audio (6), au moins un signal MLS (5) et au moins un signal audio (6) étant émis simultanément par le biais d'au moins deux systèmes d'émission de signal (8).

7. Procédé selon l'une des revendications précédentes, **caractérisé en ce qu'**un signal MLS (5) d'une durée donnée est utilisé, le signal MLS (5) étant divisé en au moins deux segments MLS (5a - 5d), en particulier de longueur différente dans le temps, les au moins deux segments MLS (5a - 5d) étant émis dans une première séquence par le biais d'un premier système d'émission de signal (8) et dans une autre séquence différente de la première séquence par le biais d'au moins un autre système d'émission de signal (8).

8. Procédé selon la revendication 7, **caractérisé en ce qu'**une association des segments MLS (5a - 5d) reçus à des systèmes d'émission de signal (8) respectifs est effectuée sur la base de la séquence différente de segments MLS (5a - 5d) respectifs reçue par au moins un système de réception de signal (13).

9. Dispositif (1), **caractérisé en ce que** le dispositif (1) est configuré pour exécuter un procédé de détermination de la réponse impulsionnelle spatiale, RIR, d'un habitacle d'un véhicule automobile (4) présentant un volume spatial (2) donné selon l'une des revendications précédentes, le dispositif (1) comprenant :
- au moins un système d'émission de signal (8), qui est configuré pour émettre simultanément au moins un signal de type séquence de longueur maximale, signal MLS, (5) et au moins un signal audio (6) différent du signal MLS (5) dans un volume spatial (2) d'un habitacle d'un véhicule automobile (4), dont la réponse impulsionnelle spatiale est à déterminer, un signal combiné (7) contenant l'au moins un signal MLS (5) et l'au moins un signal audio (6) étant généré par l'émission simultanée de l'au moins un signal MLS (5) et de l'au moins un signal audio (6), et
- au moins un système de détermination (12), qui est configuré pour déterminer la réponse impulsionnelle spatiale de l'habitacle du véhicule automobile (4) à partir du signal combiné (7).

10. Système audio (11) pour un véhicule automobile (4) présentant un habitacle, comprenant au moins un système d'émission de signal (8), qui est configuré pour émettre des signaux audio (6) dans l'habitacle du véhicule automobile (4), **caractérisé en ce qu'**il présente au moins un dispositif (1) selon la revendication 9, l'émission de signaux audio (6) étant effectuée sur la base de la réponse impulsionnelle spatiale déterminée par le dispositif (1).
